## Europäisches Patentamt
## European Patent Office
## Office européen des brevets

(19)

(11) Publication number: **0 095 102**
**B1**

(12)

# EUROPEAN PATENT SPECIFICATION

(45) Date of publication of patent specification: **12.08.87**

(51) Int. Cl.⁴: **G 01 N 1/12**, G 01 K 13/12

(21) Application number: **83104698.2**

(22) Date of filing: **13.05.83**

(54) **Sampling device for taking molten metal samples while contemporaneously measuring the temperature of the molten bath.**

(30) Priority: **20.05.82 IT 2138982**

(43) Date of publication of application:
**30.11.83 Bulletin 83/48**

(45) Publication of the grant of the patent:
**12.08.87 Bulletin 87/33**

(84) Designated Contracting States:
**AT BE CH DE FR GB LI LU NL SE**

(56) References cited:
**FR-A-2 389 121**
**US-A-3 922 916**
**US-A-3 950 992**
**US-A-4 037 478**

(73) Proprietor: **SIDERMES S.r.l.**
**Via Donizetti, 51**
**Carate Brianza Milano (IT)**

(72) Inventor: **Farina, Gaetano**
**Via Acquedotto, 39**
**Seveso (Milano) (IT)**
Inventor: **Martinelli, Sergio**
**Via dei Mandorli, 25**
**Cesano Boscone (Milano) (IT)**

(74) Representative: **Gervasi, Gemma, Dr. et al**
**Studio Brevetti e Marchi NOTARBARTOLO &**
**GERVASI 33, Viale Bianca Maria**
**I-20122 Milano (IT)**

Courier Press, Leamington Spa, England.

## Description

An immersion-type sampling device is herein described which permits the user to obtain a sample of molten metal, taken at a point below the surface of the molten bath and, contemporaneously, a measurement of the temperature of the molten bath at the point where the sample is taken. The sampler obtains two metallic samples at the same time, one being of the medallion type — suitable for spectrographic analysis — the other of the cylinder or pin type, suitable for making chemical and other kiinds of analyses.

Sampling devices of this type are known in the technical branches of this industry as, for example, described in USA patents No. 3,950,992; 3,922,916; 4,037,478; and French patent 2,389,121 which accomplishes these same ends. These known sampling devices which also contemporaneously measure the temperature of the molten bath do not, however, provide an accurate and reliable measurement of the bath temperature. The primary reason for this inconvenience is the fact that the electrical conductors which go to the thermocouple are subjected to sudden and non-uniform temperature changes as a result of being exposed to hot gases issuing from the molten metal and, in particular, the sample.

The scope of the invention herein described is to provide a sampling device of the type specified above which is capable of producing precise and highly-reliable temperature measurements while, at the same time, providing metallic test specimens which have constant and uniform dimensions and have no cavities or defects due to gas inclusions.

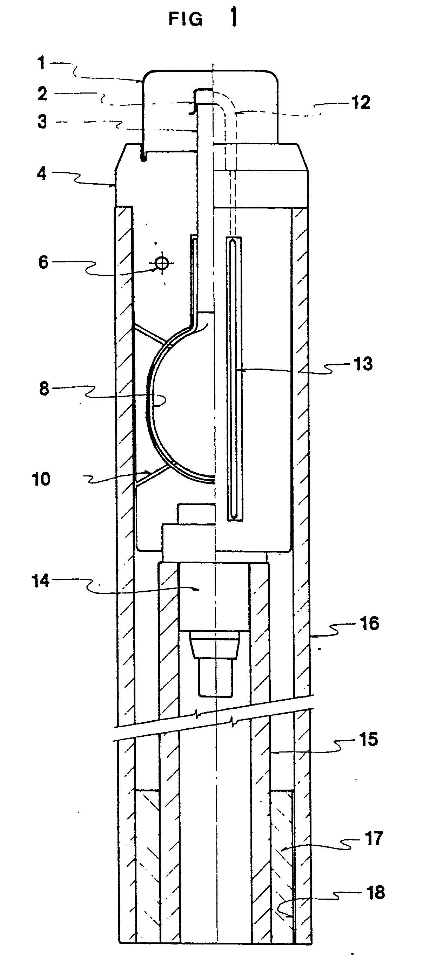

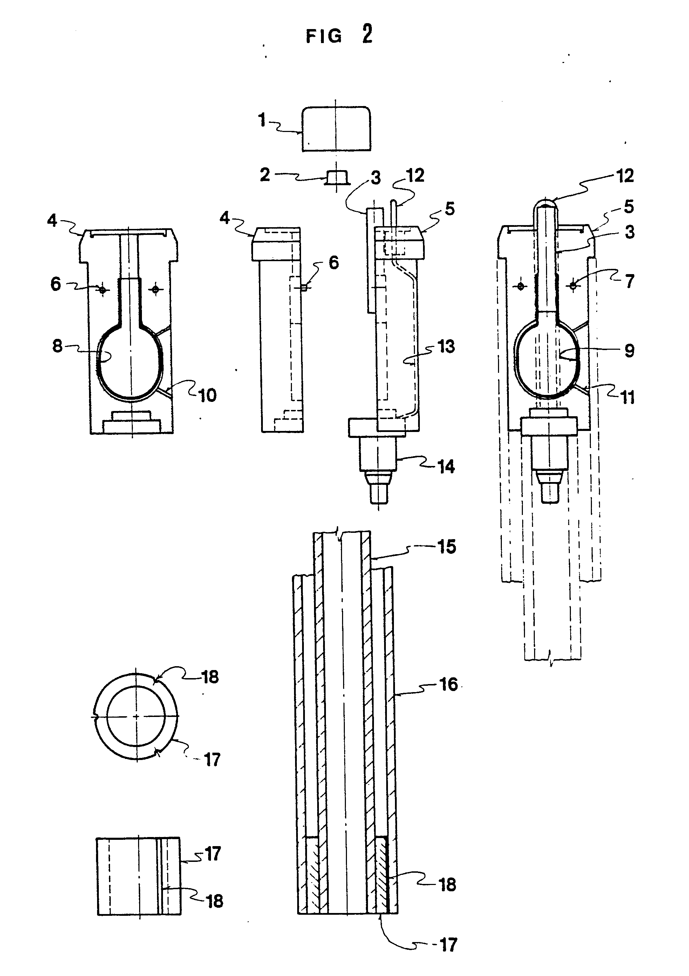

The sampling device in accordance with this invention is hereunder described in detail, with apparatus references being made to the preferred embodiments, Figures 1 and 2. The device consists of a cylindrical body member made of refractory material which is porous to gas. This body, which is indicated as 4, is composed of two semi-cylindrical and symmetrical parts which are held tightly together by means of two or more holding studs, 6 and 7. A shell mold, for producing the medallion-type test specimen, is situated inside the cylindrical body member. The mold halves are numbered 8 and 9. On the mating edges of these two metallic mold halves are notches for allowing both the original trapped air inside the mold and the gas developed by the molten-metal sample to escape. Vent grooves, 10 and 11, located near these notches, carry off the vented gases. The grooves forming the vents are made in the refractory material of the cylindrical body.

The molten metal enters the shell mold through a cylindrical conduit, 3, which is made of refractory material, particularly quartz, which serves to form the cylindrical or pin-type test specimen.

The outer end of the cylindrical conduit is closed off by a small metallic cap, 2, which liquifies when it comes in contact with the molten bath during sample taking. Cap 1 also has a low melting point and, together with cap 2, serves to assure that the molten-metal sample can be taken at the desired point in the bath without there being any contamination of the sample by slag or slag-liquifying agents.

If the molten metal has not been deoxidized or killed, a suitable sample can be taken from it which will be compact and homogeneous by means of the appropriate use of an additive, in particular, aluminum. This additive is provided in the form of a pill which is placed inside the protective cap.

Another essential feature of this device, its temperature-measuring capability, is accomplished by means of a thermocouple located inside a U-shaped refractory tube, 12, and two electrical conductors which run down a longitudinal groove, 13, in the refractory material of the cylindrical body, and connect to the connector element, which is made of synthetic resin material. This connector element 14, can well be made of ABS resin and permits easy connecting up of the sampling device with the temperature indicating instrument. The element, 14, is force-fitted into an internal cardboard tube 15 which makes it serve as a support and fixing means for the sampler.

Another essential part of the device is an external cardboard tube, 16, and a cardboard sleeve, 17, which is provided with the groove, 18, for permitting the escape of hot gases from the molten metal. The sleeve, 17, keeps the two cardboard tubes 15, 16 in a coaxial position and serves to improve rigidity and mechanical strength of the whole device.

Since the inaccuracy and unreliability of measuring temperatures with these devices is substantially due to the rapid and non-uniform heating of the electrical conductors that connect the thermocouple to the temperature indicating instrument, the sampling device of this invention has incorporated a series of structural features which overcome this overheating effect as much as possible.

These features include:
— the external tube, 15, through which the electrical conductors pass and are kept isolated from the gases which flow through the space between the two cardboard tubes;
— the element, 14, which offers thermal insulation protection by virtue of the insulating properties of the synthetic resin of which it is made in addition to the further insulation effect of the small space provided between the mounting end of the element and refractory surface of the cylindrical body;
— certain design details which permit the gathering and carrying off of the hot gases released by the molten metal sample, consisting, in particular of the cardboard sleeve 17 located between the two cardboard tubes 15, 16; and the slight taper in the refractory, cylindrical body member 4, starting from the sealing collet, 5, and going to the opposite end of the cylinder 4. This taper creates a small space between the cylinder and the external cardboard tube 16.

The cardboard sleeve 17 is provided with at least a longitudinal groove 18 running between the external tube 16 and the cardboard sleeve 17. These designs details contribute collectively to effecting the carrying off of the gases, given off by the molten metal which enters the sampling device, in a very efficient manner due to the chimney-type draft which is produced.

According to a not claimed possible embodiment, the cylindrical body member 4 could not include two metallic mold halves, but only include a cavity within which the molten metal flows through the cylindrical conduit 3 and connected with the outside of the sampler through the vent grooves 10 and 11, which connect the cavity of the mould to said longitudinal groove 18. In the lower part of such a cavity may be located a further thermocouple, connected with the connector element 14 and able to furnish the cooling curve of the molten metal.

Moreover, in the upper part of the body 4 may be located further electro-thermic or electrochemical sensitive devices, connected by means of electrical conductors, running in longitudinal grooves of the refractory body, to the connector element 14. Such devices may be so selected to be able to furnish other technical data of interest about the molten metal bath, as it may be the concentration of oxygen therein dissolved and the like.

## Claims

1. Immersion-type, molten-metal sampling device for sampling metal from a molten bath and, contemporaneously, measuring the temperature of bath; consisting of a cylindrical body member (4) made of porous refractory material, a shell-type mold (8 and 9) for producing a medallion type metallic test specimen, a cylindrical conduit (3) made of refractory material, for allowing molten metal to flow into the mold; a temperature-measuring element consisting of a thermocouple located in a U-shaped refractory tube (12), which comes in direct contact with the molten bath for measuring its temperature; electrical conductors which connect the thermocouple to a temperature-indicating instrument; a connector element (14) made of synthetic resin, which contains electrical contacts for connecting up leads coming to the device directly to the electrical conductors coming from the thermocouple; an internal cardboard tube (15) inserted over said connector element (14), an external cardboard tube (16) coaxial with said internal cardboard tube (15) and which is inserted over the refractory cylindrical body member (4) characterized by the fact that a cardboard sleeve (17) is located between said internal and external cardboard tubes (5, 6); the cylindrical body member (4) is slightly tapered towards the interior of the sampling device, providing a space between said member (4) and said external cardboard tube (16); the cardboard sleeve (17) is provided with at least a longitudinal groove (18) running between the external cardboard tube (16) and the cardboard sleeve (17); vent grooves (10, 11) are made in the cylindrical body member (4) and connect the cavity of the mould to said space whereby a chimney-type draft for venting hot gases is obtained through said vent grooves (10, 11) and longitudinal groove (18).

2. A device according to claimn 1, characterized by the fact that the electrical conductors coming from the thermocouple are lodged in longitudinal groove (13) formed in the refractory material of the cylindrical body member (4).

## Patentansprüche

1. Eintauch-Metallschmelzeprobennahmevorrichtung zur Entnahme von Metallproben aus einem Schmelzebad und zur gleichzeitigen Messung der Badtemperatur; bestehend aus einem zylindrischen Körperteil (4), der aus einem porösen, feuerfesten Material hergestellt ist, einer schalenartigen Form (8 und 9) zur Erzeugung eines medaillonartigen metallischen Prüfmusters, einer aus feuerfestem Material hergestellten zylindrischen Leitung (3), um es der Metallschmelze zu ermöglichen, in die Form zu fließen; einem Temperaturmeßelement, das aus einem in einem U-förmigen, feuerfesten Rohr (12) angeordneten Thermoelement besteht, welches in direkten Kontakt mit dem Schmelzebad gelangt, um dessen Temperatur zu messen; elektrischen Leitern, das das Thermoelement mit einem Temperaturanzeigeinstrument verbinden; einem aus Kunstharz hergestellten Anschlußelement (14), das elektrische Kontakte zum Anschließen von zur Vorrichtung kommenden Leitungen direkt an die vom Thermoelement kommenden elektrischen Leiter enthält; einem inneren Papperohr (15), das über dem Anschlußelement (14) eingesetzt ist; ein äußeres Papperohr (16), das koaxial zu inneren Papperohr (15) ist und über dem feuerfesten zylindrischen Körperteil (4) aufgenommen ist, dadurch gekennzeichnet, daß eine Pappehülse (17) zwischen dem inneren und dem äußeren Papperohr (15, 16) angeordnet ist; der zylindrische Körperteil (4) sich etwas zum Inneren der Probennahmevorrichtung verjüngt, wobei ein Raum zwischen dem Teil (4) und dem äußeren Papperohr (16) vorgesehen wird; die Pappehülse (17) mit wenigstens einer Längsnut (18) versehen ist, die zwischen dem äußeren Papperohr (16) und der Pappehülse (17) verläuft; Lüftungsnuten (10, 11) im zylindrischen Körperteil (4) erzeugt sind und den Hohlraum der Form mit dem Raum verbinden, wodurch ein kaminartiger Abzug zur Entlüftung heißer Gase durch die Lüftungsnuten (10, 11) und die Längsnut (18) erhalten wird.

2. Vorrichtung nach Anspruch 1, dadurch gekennzeichnet, daß die vom Thermoelement kommenden elektrischen Leiter in einer im feuerfesten Material des zylindrischen Körperteils (4) gebildeten Längsnut (13) untergebracht sind.

## Revendications

1. Dispositif d'échantillonnage de métal fondu du type à immersion dans un bain de métal fondu et, en même temps, de mesure de la température du bain, constitué par un corps cylindrique (4) en matériau réfractaire poreux, un moule en forme de coquille (8 et 9) pour produire un échantillon d'essai du type médaillon, un conduit cylindrique (3) en matériau réfractaire permettant au métal fondu de couler dans le moule; un élément de mesure de la température constitué par un thermocouple placé dans un tube réfractaire (12) en forme de U, qui vient directement en contact avec le bain fondu pour mesurer sa température; des conducteurs électriques qui relient le thermocouple à un instrument indicateur de température; un connecteur (14) en résine synthétique qui contient les contacts électriques pour connecter des fils amenés au dispositif, directement aux conducteurs électriques venant du thermocouple; un tube intérieur en carton (15) inséré sur ledit connecteur (14); un tube extérieur en carton (16) coaxial avec ledit tube intérieur en carton (15) et qui est monté sur le corps réfractaire cylindrique (4), caractérisé en ce qu'un manchon en carton (17) est placé entre lesdits tubes en carton intérieur et extérieur (15, 16); le corps cylindrique (4) est légèrement conique vers l'intérieur du dispositif d'échantillonnage, procurant un espace entre ledit corps (4) et ledit tube extérieur en carton (16); le manchon de carton (17) est pourvu d'au moins une rainure longitudinale (18) passant entre le tube extérieure en carton (16) et le manchon en carton (17); des canaux de ventilation (10, 11) sont creusés dans le corps cylindrique (4) et relient la cavité du moule audit espace, ce qui procure un effect de tirage de cheminée pour la ventilation des gaz chauds par lesdits cannaux de ventilation (10, 11) et la rainure longitudinale (18).

2. Dispositif selon la revendication 1, caractérisé en ce que les conducteurs électriques venant du thermocouple sont placés dans une rainure longitudinale (13) formée dans le matériau réfractaire du corps cylindrique (4).

FIG 1

# FIG 2